# EUROPÄISCHE PATENTSCHRIFT

(11) **EP 1 588 683 B1**
(45) Veröffentlichungstag und Bekanntmachung des Hinweises auf die Patenterteilung: **23.05.2007**
(21) Anmeldenummer: 05450071.5
(22) Anmeldetag: 15.04.2005
(51) Int. Cl.: A61G 5/06, B62B 5/02

(54) **Vorrichtung zum Treppensteigen für einen Rollstuhl**
Stair climbing device for wheelchair
Dispositif pour monter des escaliers pour un fauteuil roulant

(30) Priorität: 19.04.2004 AT 6702004; 20.10.2004 AT 17602004
(43) Veröffentlichungstag der Anmeldung: 26.10.2005
(73) Patentinhaber: Bierma, Jochum Ing., A-4040 Linz (AT)
(72) Erfinder: Bierma, Jochum Ing., A-4040 Linz (AT)
(74) Vertreter: Hübscher, Heiner

(56) Entgegenhaltungen:
- DE-C1- 3 530 695
- US-A- 4 771 839

## Beschreibung

Die Erfindung bezieht sich auf eine Vorrichtung zum Treppensteigen für einen Rollstuhl mit einem eine Hubeinrichtung aufweisenden Fahrgestell und mit Aufnahmen für die Laufräder des Rollstuhles an quer zu den Radachsen verlaufenden Armen seitlich neben dem Fahrgestell.

Vorrichtungen zum Treppensteigen für Rollstühle weisen ein mit Rädern versehenes Fahrgestell auf, das eine Hubeinrichtung beispielsweise mit einem heb- und senkbaren Stützfuß aufnimmt, der auf eine Trittstufe aufgesetzt wird und das Fahrgestell je nach Fahrrichtung auf die nächste Stufe anhebt oder absenkt. Die Steuerung des Fahrgestells erfolgt von Hand aus über eine Schiebeführung mit Handgriffen, die Steuerschalter zur Betätigung des elektrischen Antriebs der Hubeinrichtung tragen. Zur Verbindung der Treppensteigvorrichtung mit einem Rollstuhl wird am Stuhlgestell eine Halterung zur Aufnahme des Fahrgestells der Treppensteigvorrichtung vorgesehen, die in der Halterung mit Hilfe eines Schnellverschlusses gesichert wird. Allerdings müssen die Laufräder des Rollstuhles für den Einsatz der Treppensteigvorrichtung abgenommen werden. Um eine Treppensteigvorrichtung unabhängig von einer Halterung für deren Fahrgestell am Rollstuhl einsetzen zu können, ist es außerdem bekannt, am Fahrgestell der Treppensteigvorrichtung einen Träger für zwei seitlich neben dem Fahrgestell in dessen Längsrichtung verlaufende Arme anzubringen, die mit Aufnahmen für die Laufräder des Rollstuhles versehen sind, so daß ein Rollstuhl mit seinen Laufrädern in diese Aufnahmen geschoben und an der Schiebeführung des Fahrgestells der Treppensteigvorrichtung mittels einer einfachen Klemmeinrichtung festgeklemmt werden kann. Der Rollstuhl stützt sich somit über seine Laufräder und die seitlichen Arme lastabtragend am Fahrgestell der Treppensteigvorrichtung mit dem Vorteil ab, daß am Rollstuhl keine gesonderte Halterung zur Aufnahme der Treppensteigvorrichtung vorzusehen ist und ein Abnehmen der Laufräder des Rollstuhles für den Einsatz der Treppensteigvorrichtung entbehrlich wird. Nachteilig bei den bekannten Treppensteigvorrichtungen mit seitlichen Aufnahmen für die Laufräder eines Rollstuhles ist allerdings, daß der Träger mit den beiden seitlichen Armen für die Aufnahmen jeweils vom Fahrgestell abgenommen werden muß, um die Treppensteigvorrichtung platzsparend lagern zu können, wie dies beispielsweise für die Mitnahme in einem Fahrzeug notwendig ist.

Dokument US 4 771 839 offenbart eine Vorrichtung mit allen technischen Merkmalen des Oberbegriffs des Anspruchs 1.

Der Erfindung liegt somit die Aufgabe zugrunde, eine Vorrichtung zum Treppensteigen für einen Rollstuhl der eingangs geschilderten Art so auszugestalten, daß trotz der für die Radabstützung des Rollstuhles notwendigen seitlichen Auslage der Arme eine platzsparende Transportstellung ermöglicht wird, ohne die Arme vom Fahrgestell abnehmen zu müssen.

Die Erfindung löst die gestellte Aufgabe dadurch, daß die Arme jeweils wenigstens einen Bügel bilden, der um eine in einem Rahmen angeordnete Querachse aus einer anschlagbegrenzten Ausschwenklage in eine gegen den Rahmen eingeschwenkte Lage schwenkverstellbar gelagert ist, und daß der seitlich am Fahrgestell um eine Längsachse angelenkte Rahmen aus einer anschlagbegrenzten, abgeklappten Arbeitsstellung in eine Ruhestellung hochklappbar ist.

Da zufolge dieser Maßnahmen die Arme mit den Aufnahmen für die Laufräder des Rollstuhls zumindest einen Bügel bilden, der in seiner Ausschwenklage in einem Rahmen anschlagbegrenzt gehalten wird, ergibt sich für die Lastabtragung auf das Fahrgestell der Treppensteigvorrichtung eine ausreichend steife Konstruktion. Die Bügel werden nämlich durch die Laufräder des Rollstuhls im Anschlagsinn beaufschlagt. Mit dem Einschwenken des jeweiligen Bügels gegen den Rahmen wird nicht nur eine flache Bauweise für das Hochklappen des Rahmens in die Ruhestellung, sondern auch eine Verkürzung der Arme im wesentlichen auf die Rahmenlänge erreicht, so daß nach dem Hochklappen des Rahmens mit dem eingeschwenkten Bügel eine Ruhestellung ermöglicht wird, die den Platzbedarf zum Lagern des Fahrgestells kaum vergrößert, weil die Breite des Fahrgestells nur durch die hochgeklappten Rahmen vergrößert wird.

Werden für die beidseitigen Arme zur Aufnahme der Laufräder jeweils zwei Bügel vorgesehen, die um mit gegenseitigem Abstand in Längsrichtung des Fahrgestells in einem Rahmen angeordnete Querachsen verschwenkbar gelagert sind, so kann zusätzlich eine Anpassung an unterschiedliche Durchmesserbereiche der Laufräder ermöglicht werden. Mit dem Einschwenken der jeweils vorderen Bügel gegen den zugehörigen Rahmen wird nämlich das Einschieben eines Rollstuhles mit kleineren Laufrädern in die Radaufnahmen erleichtert. Außerdem kann eine rahmenseitige Radaufnahme zur Wirkung kommen, die einen auf den kleineren Laufraddurchmesser abgestimmten, kürzeren Abstand zur Radaufnahme des hinteren Bügels aufweist. Zum Einschieben des Rollstuhles in die Radaufnahmen braucht wegen der eingeschwenkten vorderen Bügel das Fahrgestell der Treppensteigvorrichtung nicht oder nur geringfügig nach vorne gekippt zu werden. Wegen des gegenseitigen Abstandes der Querachsen zur Lagerung der beiden Bügel jedes Armes wird beim Einschwenken der Bügel gegen den Rahmen ebenfalls eine Verkürzung der Arme im wesentlichen auf die Rahmenlänge sichergestellt.

Besonders einfache Konstruktionsverhältnisse ergeben sich, wenn die Bügel der beidseitigen Arme zwei parallele, mit Abstand voneinander auf den Querachsen gelagerte Stege aufweisen, die endseitig durch Radaufnahmen bildende Abstandhalter verbunden sind. Die Stege der Bügel können in diesem Fall Seitenführungen für die Laufräder des Rollstuhles bilden und bieten darüber hinaus vorteilhafte Vorraussetzungen für ein platzsparendes Gegeneinanderschwenken zweier Bügel, weil hiefür lediglich der Außenabstand der beiden Stege des einen Bügels kleiner als der Innenabstand der Stege des anderen der beiden in einem Rahmen gelagerten Bügel zu wählen ist, um die Bügel beim Einschwenken gegen den Rahmen ineinandergreifen zu lassen. Wird der Abstandhalter des jeweils vorderen Bügels als Auffahrrampe für ein Laufrad des Rollstuhles ausgebildet, so wird das Einschieben des Rollstuhles in die seitlichen Radaufnahmen zusätzlich erleichtert.

Wird eine einfachere Konstruktion mit nur je einen Bügel je Arm eingesetzt, so kann zum Erleichtern des Auffahrens auf die Arme eine Auffahrrampe vorgesehen werden, die als doppelarmiger Hebel ausgebildet und im Rahmen in einem Abstand in Längsrichtung des Fahrgestells vor dem jeweiligen Bügel um eine Querachse anschlagbegrenzt verschwenkbar gelagert ist, so daß diese Auffahrrampe beim Überrollen durch die Laufräder des Rollstuhles in eine Stellung verschwenkt wird, in der die die Auffahrrampe tragende Querachse ein Widerlager zum Abtragen der Gewichtsbelastung durch den Rollstuhl auf den Rahmen bilden kann.

Für die anschlagbegrenzte Ausschwenklage der Bügel können vorteilhafte Konstruktionsbedingungen geschaffen werden, wenn die Anschläge für die beiden Bügel der beidseitigen Arme aus je einem Querholm des Rahmens bestehen, wobei der Querholm für den Anschlag des hinteren Bügels außerhalb und der Querholm für den Anschlag des vorderen, über die ihn aufnehmende Querachse hinaus verlängerten Bügels zwischen den beiden Querachsen zur Lagerung der beiden Bügel liegen. Der zwischen den beiden Querachsen zur Lagerung der Bügel liegende Querholm bedingt zwar eine Verlängerung des vorderen Bügels über seine ihn aufnehmende Querachse hinaus, um für diesen Bügel als Anschlag wirksam werden zu können, doch kann dieser Querholm vorteilhaft als Aufnahme für ein Laufrad des Rollstuhles genützt werden. Dies ist für den Querholm zum Anschlagen des hinteren Bügels nicht erforderlich. Aus diesem Grunde wird dieser Querholm außerhalb der Querachsen zur Lagerung der beiden Bügel angeordnet, um den für das Einschwenken der Bügel gegen den Rahmen erforderlichen Platzbedarf nicht einzuschränken.

In der Zeichnung ist der Erfindungsgegenstand beispielsweise dargestellt. Es zeigen
- Fig. 1: eine erfindungsgemäße Vorrichtung zum Treppensteigen für einen Rollstuhl in einer schematischen Seitenansicht,
- Fig. 2: diese Treppensteigvorrichtung in einer Draufsicht,
- Fig. 3: die Treppensteigvorrichtung in einer Vorderansicht, die
- Fig. 4 und 5: die Treppensteigvorrichtung in einer schematischen Seitenansicht in zwei unterschiedlichen Gebrauchsstellungen in einem kleineren Maßstab,
- Fig. 6: eine Draufsicht auf den abgeklappten Rahmen einer Konstruktionsvariante in einem größeren Maßstab und
- Fig. 7: einen Schnitt nach der Linie VII-VII der Fig. 6.

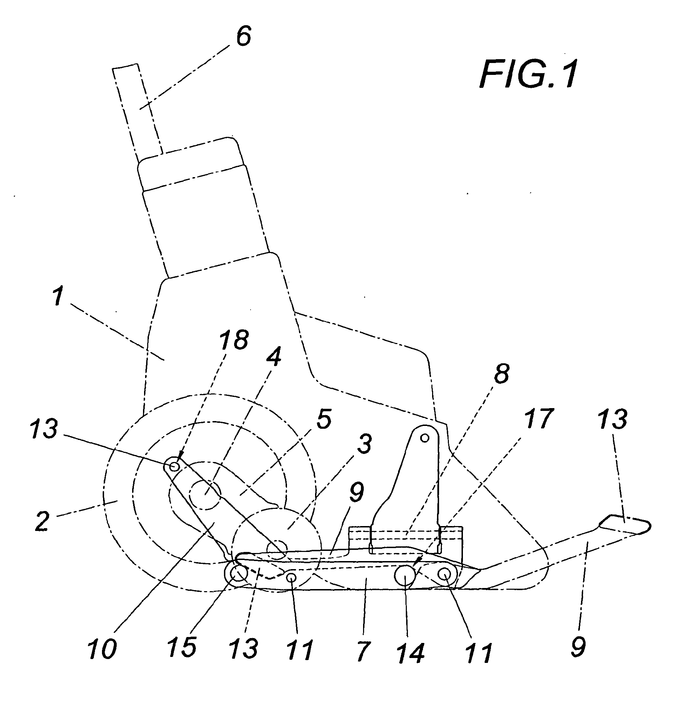

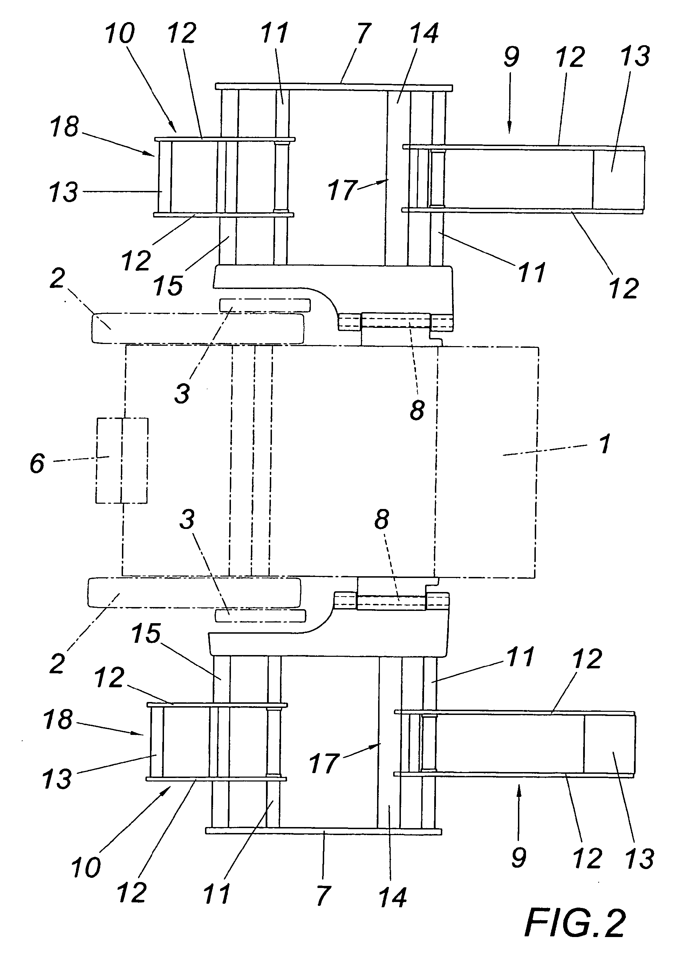

Die Treppensteigvorrichtung gemäß dem Ausführungsbeispiel nach den Fig. 1 bis 5 weist ein Fahrgestell 1 mit beidseitigen Rädern 2 und einer nicht näher dargestellten Hubeinrichtung auf, um die Vorrichtung über auf die jeweils nächste Treppenstufe aufsetzbare Stützfüße in bekannter Art auf die nächste Treppenstufe anzuheben oder abzusenken. Mit Hilfe von Rollen 3, die auf einem um eine Achse 4 verschwenkbaren Hebel 5 gelagert sind, wird das unbeabsichtigte Abrollen von einer Treppenstufe verhindert, weil mit dem Abfallen der Rollen 3 die Räder 2 gebremst werden. Zur Führung des Fahrgestells 1 dient eine Schiebeführung 6, die aus einem lösbar mit dem Fahrgestell 1 verbundenen Holm besteht, der an seinem oberen Ende mit Handgriffen versehen ist.

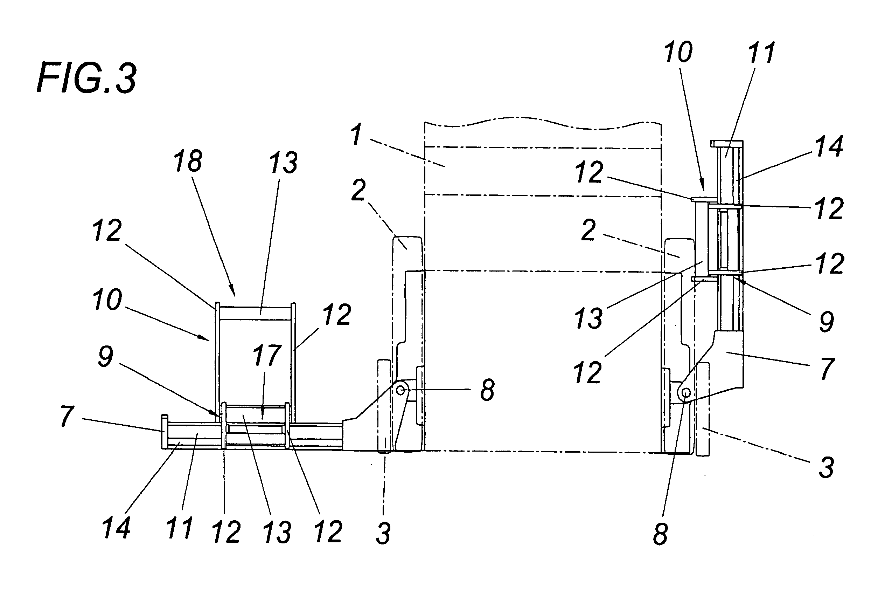

Zur Aufnahme eines Rollstuhles sind an den Seitenteilen des Fahrgestells 1 Rahmen 7 angelenkt, und zwar mit Hilfe einer in Längsrichtung des Fahrgestells 1 verlaufenden Anlenkachse 8. Der Rahmen 7 kann daher aus einer anschlagbegrenzten Abklappstellung in eine Ruhestellung hochgeklappt werden, wie dies der Fig. 3 entnommen werden kann. In den Rahmen 7 sind jeweils zwei Bügel 9 und 10 um Querachsen 11 verschwenkbar gelagert. Diese Bügel 9, 10 weisen zwei mit Abstand voneinander angeordnete Stege 12 auf, die an ihren Enden durch Abstandhalter 13 verbunden sind. Die Bügel 9, 10 schlagen in der ausgeschwenkten Stellung an Querholmen 14 und 15 des Rahmens 7 an. Während der Querholm 15 außerhalb der beiden Querachsen 11 liegt, ist der Querholm 14 zwischen den beiden Querachsen 11 angeordnet, was eine Verlängerung der Bügel 9 über die sie aufnehmende Querachse 11 erfordert. Da der Innenabstand der Schenkel 12 der hinteren Bügel 10 größer als der Außenabstand der Schenkel 12 der vorderen Bügel 9 gewählt ist, können die Bügel 9, 10 aus ihrer ausgeschwenkten Anschlaglage gegen den Rahmen 7 einander übergreifend eingeschwenkt werden, wie dies in der Fig. 3 angedeutet ist. Im Bereich des in Fahrrichtung rechten Rahmens 7, der in der abgeklappten Anschlagstellung gezeichnet ist, ist der vordere Bügel 9 gegen den Rahmen 7 hin eingeschwenkt dargestellt. Für den in die Ruhestellung hochgeklappten Rahmen 7 auf der linken Seite des Fahrgestells 1 greifen die eingeschwenkten Bügel 9, 10 ineinander, so daß das Fahrgestell 1 durch die in die Ruhestellung hochgeklappten Rahmen 7 nur unwesentlich verbreitert werden.

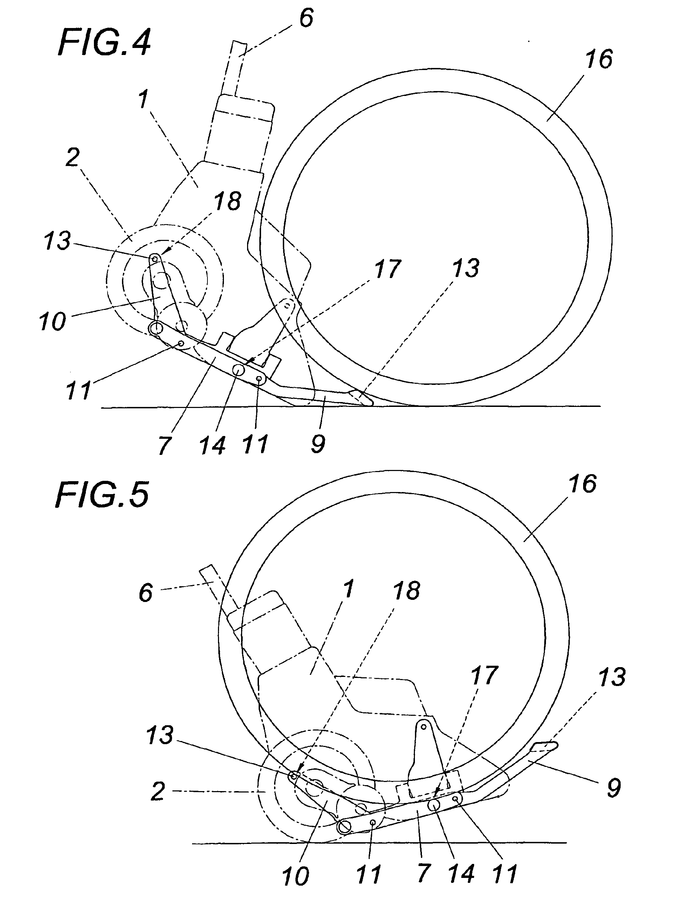

Entsprechend der Fig. 4, in der die Bügel 9, 10 in die Anschlaglage ausgeschwenkt sind, wird das Fahrgestell 1 nach vorne angekippt, um die vorderen Bügel 9 zum Aufschieben der Laufräder 16 eines nicht näher dargestellten Rollstuhls zu erleichtern. Zu diesem Zweck bildet der Abstandhalter 13 der vorderen Bügel 9 eine Auffahrrampe, so daß die Laufräder 16 über diese Auffahrrampe zu den Aufnahmen 17 und 18 gerollt werden können, die durch den Querholm 14 für den Anschlag der vorderen Bügel 9 und durch den Abstandhalter 13 der hinteren Bügel 10 gebildet und durch den Abstandhalter 13 der vorderen Bügel ergänzt werden. Das Fahrgestell 1 kann nach dem Einschieben der Laufräder 16 eines Rollstuhles in die Bügel 9, 10 in herkömmlicher Weise durch eine Klemmeinrichtung an der Verschiebeführung 6 festgeklemmt werden, um den Rollstuhl gemäß der Fig. 5 durch ein Nachhintenkippen des Fahrgestells 1 anzuheben und über das Fahrgestell 1 bzw. dessen Hubeinrichtung 3 zu verfahren.

Die ausgeschwenkte Lage der vorderen Bügel 9 nach den Fig. 4 und 5 wird jedoch nur bei Rollstühlen mit Laufrädern in einem größeren Durchmesserbereich eingesetzt. Laufräder in einem kleineren Durchmesserbereich benötigen zur ihrer Aufnahme die ausgeschwenkten vorderen Bügel 9 nicht. Die vorderen Bügel 9 werden daher gemäß der Fig. 1 für Rollstühle mit kleineren Laufrädern aus der strichpunktiert angedeuteten Ausschwenklage in die mit vollen Linien gezeichnete Lage gegen den Rahmen 7 hin eingeschwenkt, so daß zum Aufnehmen der Laufräder das Fahrgestell 1 nicht nach vorne angekippt zu werden braucht. Die Aufnahmen 17 und 18 genügen in diesem Fall für die sichere Abstützung des Rollstuhls über seine Laufräder, wenn der Rollstuhl an der Schiebeführung 6 entsprechend festgeklemmt wird.

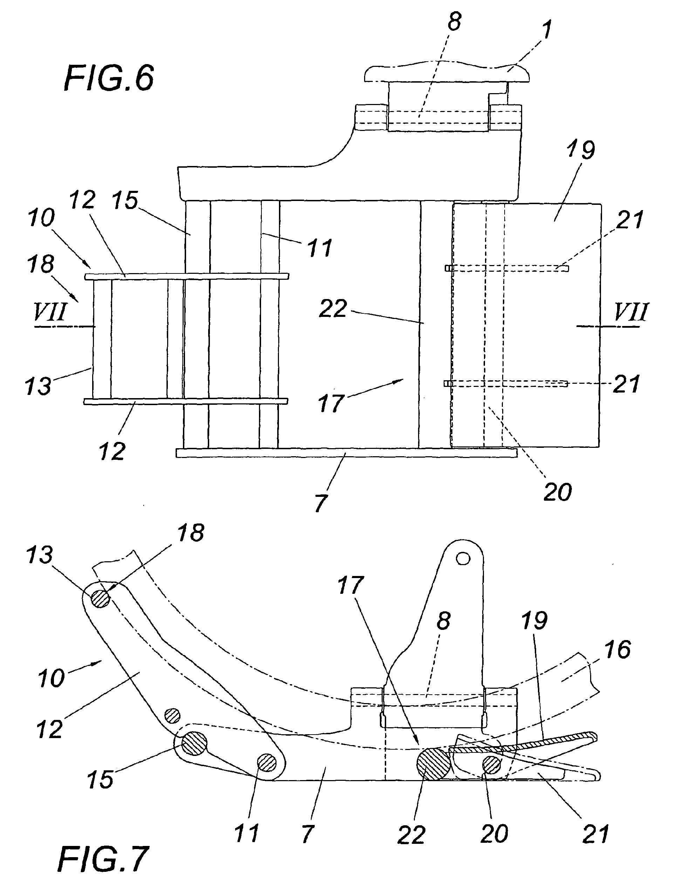

Die Ausführungsform nach den Fig. 6 und 7 ist auf die Aufnahme von Rollstühlen beschränkt, deren Laufräder 16 ohne den vorderen Bügel 9 auskommen, der somit entfällt, was besonders einfache Konstruktionsverhältnisse schafft. Das Auffahren der Laufräder 16 auf den Rahmen 7 zur Abstützung an den Aufnahmen 17, 18 wird durch eine anstelle des Bügels 9 vorgesehene Auffahrrampe 19 erleichtert, die um eine Querachse 20 des Rahmens 7 anschlagbegrenzt verschwenkbar gelagert ist, wie dies insbesondere der Fig. 7 entnommen werden kann. Diese Auffahrrampe 19 liegt in der in der Fig. 7 strichpunktiert angedeuteten abgeschwenkten Stellung auf Stützhebeln 21 auf, die auf der Querachse 20 gelagert und an einem Querholm 22 abgestützt sind. Da die Auffahrrampe 19 bezüglich der Querachse 20 einen zweiarmigen Hebel darstellt, wird die Auffahrrampe 19 beim Überfahren durch die Laufräder 16 in die in vollen Linien dargestellte Lage hochgeschwenkt, so daß bei Bedarf auch die Querachse 20 als Auflager für die Laufräder 16 dienen kann, was eine Vergrößerung des Laufraddurchmessers im Vergleich zu den Aufnahmen 17, 18 erlaubt.

## Patentansprüche

1. Vorrichtung zum Treppensteigen, für einen Rollstuhl, mit einem eine Hubeinrichtung aufweisenden Fahrgestell (1) und mit Aufnahmen für die Laufräder des Rollstuhles an quer zu den Radachsen verlaufenden Armen seitlich neben dem Fahrgestell (1) **dadurch gekennzeichnet, daß** die Arme jeweils wenigstens einen Bügel (10) bilden, der um eine in einem Rahmen (7) angeordnete Querachse (11) aus einer anschlagbegrenzten Ausschwenklage in eine gegen den Rahmen (7) eingeschwenkte Lage schwenkverstellbar gelagert ist, und daß der seitlich am Fahrgestell (1) um eine Längsachse (8) angelenkte Rahmen (7) aus einer anschlagbegrenzten, abgeklappten Arbeitsstellung in eine Ruhestellung hochklappbar ist.

2. Vorrichtung nach Anspruch 1, **dadurch gekennzeichnet, daß** die Arme jeweils zwei Bügel (9, 10) bilden, die um mit gegenseitigem Abstand in Längsrichtung des Fahrgestells (1) in dem Rahmen (7) angeordnete Querachsen (11) verschwenkbar gelagert sind.

3. Vorrichtung nach Anspruch 1 oder 2, **dadurch gekennzeichnet, daß** die Bügel (9, 10) der beidseitigen Arme zwei parallele, mit Abstand voneinander auf den Querachsen (11) gelagerte Stege (12) aufweisen, die endseitig durch Radaufnahmen (17) bildende Abstandhalter (13) verbunden sind.

4. Vorrichtung nach den Ansprüchen 2 und 3, **dadurch gekennzeichnet, daß** der Außenabstand der beiden Stege (12) des einen Bügels (9) kleiner als der Innenabstand der Stege (12) des anderen der beiden in dem Rahmen (7) gelagerten Bügel (9, 10) ist.

5. Vorrichtung nach einem der Ansprüche 2 bis 4, **dadurch gekennzeichnet, daß** der Abstandhalter (13) des jeweils vorderen Bügels (9) eine Auffahrrampe bildet.

6. Vorrichtung nach Anspruch 1, **dadurch gekennzeichnet, daß** im Rahmen (7) in einem Abstand in Längsrichtung des Fahrgestells (1) vor dem Bügel (10) eine als doppelarmiger Hebel ausgebildete Auffahrrampe (19) um eine Querachse (20) anschlagbegrenzt verschwenkbar gelagert ist.

7. Vorrichtung nach einem der Ansprüche 2 bis 5, **dadurch gekennzeichnet, daß** die Anschläge für die beiden Bügel (9, 10) der beidseitigen Arme aus je einem Querholm (14, 15) des Rahmens (7) bestehen, wobei der Querholm (15) für den Anschlag des hinteren Bügels (10) außerhalb und der Querholm (14) für den Anschlag des vorderen, über die ihn aufnehmende Querachse (11) hinaus verlängerten Bügels (9) zwischen den beiden Querachsen (11) zur Lagerung der beiden Bügel (9, 10) liegen.

## Claims

1. Stair climbing device for wheelchair with an undercarriage (1) comprising a lifting device and with mounts for the wheels of the wheelchair on arms extending transversely to the wheel axes laterally beside the undercarriage (1), **characterised in that** the arms each form at least one bar element (10) which is mounted so as to be pivotally adjustable about a transverse axis (11) arranged in a frame element (7) out of a stop-limited pivoted-out position into a position pivoted in against the frame element (7), and **in that** the frame element (7) connected laterally to the undercarriage (1) about a longitudinal axis (8) can be folded up from a stop-limited, folded-out working position into a position of rest.

2. Device according to claim 1, **characterised in that** the arms respectively form two bar elements (9, 10) which are mounted so as to be pivotable about transverse axes (11) arranged spaced apart in the longitudinal direction of the undercarriage (1) in the frame (7).

3. Device according to claim 1 or 2, **characterised in that** the bar elements (9, 10) of the arms on both sides comprise two parallel web elements (12) mounted on the transverse axes (11) at a distance from each other which are connected at the end by spacers (13) forming wheel mounts (17).

4. Device according to claims 2 and 3, **characterised in that** the outer distance of the two web elements (12) of one bar element (9) is smaller than the inner distance of the web elements (12) of the other of the two bar elements (9, 10) mounted in the frame element (7).

5. Device according to one of the claims 2 to 4, **characterised in that** the spacer (13) of the respective front bar element (9) forms a drive-up ramp.

6. Device according to claim 1, **characterised in that** a drive-up ramp (19) formed as a double-armed lever is mounted so as to be adjustable in a stop-limited way about a transverse axis (20) in the frame element (7) at a distance in the longitudinal direction of the undercarriage (1) in front of the bar element (10).

7. Device according to one of the claims 2 to 5, **characterised in that** the stops for the two bar elements (9, 10) of the arms on both sides each consist of a transverse spar (14, 15) of the frame element (7), whereby the transverse spar (15) for the stop of the rear bar element (10) lies outside and the transverse spar (14) for the stop of the front bar element (9) extended beyond the transverse axis (11) receiving it lies between the two transverse axis (11) for mounting the two bar elements (9, 10).

## Revendications

1. Dispositif pour monter des escaliers, pour un fauteuil roulant, avec un châssis (1) présentant un dispositif de levage et avec des logements pour les roues du fauteuil roulant, sur des bras s'étendant transversalement par rapport aux axes de roue, latéralement à côté du châssis (1), **caractérisé en ce que** les bras forment chacun au moins un étrier (10), monté de façon à pouvoir être manoeuvrés en pivotement autour d'un axe transversal (11) disposé dans un cadre (7), d'une position sortie par pivotement, limitée par une butée, en une position rétractée par pivotement, placée contre le cadre (7), et **en ce que** le cadre (7), articulé latéralement sur le châssis (1) autour d'un axe longitudinal (8), est susceptible d'être relevé par rabattement, d'une position de travail abaissée par rabattement, limitée par une butée, en une position de repos.

2. Dispositif selon la revendication 1, **caractérisé en ce que** les bras forment chacun deux étriers (9, 10) montés à pivotement autour d'axes transversaux (11) disposés dans le cadre (7), selon un espacement mutuel dans la direction longitudinale du châssis (1).

3. Dispositif selon la revendication 1 ou 2, **caractérisé en ce que** les étriers (9, 10) des bras situés des deux côtés présentent deux nervures (12) parallèles, montées à distance l'une de l'autre sur les axes transversaux (11), les nervures étant reliées côté extrémité par des supports d'espacement (13) formant des logements de roues (17).

4. Dispositif selon les revendications 2 et 3, **caractérisé en ce que** l'espacement extérieur des deux nervures (12) d'un premier étrier (9) est inférieur à l'espacement intérieur des étriers (12) de l'autre des deux étriers (9, 10) montés dans le cadre (7).

5. Dispositif selon l'une des revendications 2 à 4, **caractérisé en ce que** le support d'espacement (13), de l'étrier (9) situé chaque fois à l'avant, forme une rampe d'ascension.

6. Dispositif selon la revendication 1, **caractérisé en ce qu'**une rampe d'ascension (19), réalisée sous forme de levier à deux bras, est montée dans le cadre (7), de façon à pouvoir pivoter en étant limitée par des butées autour d'un axe transversal (20) à distance en direction longitudinale du châssis (1), à l'avant de l'étrier (10).

7. Dispositif selon l'une des revendications 2 à 5, **caractérisé en ce que** les butées des deux étriers (9, 10) des bras situés des deux côtés sont formées chacune d'un montant transversal (14, 15) du cadre (7), le montant transversal (15), pour la butée de l'étrier arrière (10), étant situé à l'extérieur, et le montant transversal (14), pour la butée de l'étrier avant (9) prolongé au-delà de l'axe transversal (11) le supportant, étant situé entre les deux axes transversaux (11) servant au montage en palier des deux étriers (9, 10).
